# EUROPEAN PATENT APPLICATION

(11) **EP 4 614 281 A1**
(43) Date of publication of application: **10.09.2025**
(21) Application number: 23888908.3
(22) Date of filing: 19.09.2023
(51) Int. Cl.: G06F 3/01, G06F 3/00, G06N 3/02, G06V 10/82, G06V 40/20, G06T 19/00, G06F 3/14

(54) **AUGMENTED REALITY DEVICE WHICH RECOGNIZES OBJECT USING ARTIFICIAL INTELLIGENCE MODEL OF EXTERNAL DEVICE, AND OPERATION METHOD THEREFOR**

(30) Priority: 07.11.2022 KR 20220147382
(71) Applicant: Samsung Electronics Co., Ltd., Suwon-si, Gyeonggi-do 16677 (KR)
(72) Inventor: LEE, Jaehong, Suwon-si, Gyeonggi-do 16677 (KR); CHO, Chihyun, Suwon-si, Gyeonggi-do 16677 (KR)
(74) Representative: Arnold & Siedsma
(86) International application number: PCT/KR2023/014199
(87) International publication number: WO 2024/101643

(57) **Abstract**

Augmented reality device for recognizing an object by using an artificial intelligence model of an external device, and an operation method thereof, configured to transmit an image and sensor data to a mobile device, receive information about a direction, a type, and an object detection area of an object obtained from the image according to a result of object recognition performed by using a first artificial intelligence model included in the mobile device, adjust a location of the object detection area, based on a value of the sensor data changed at a time point when the result of the object recognition is received from the mobile device, determine a second artificial intelligence model for recognizing the object, based on the direction and the type of the object included in the object detection area, and recognize the object from the object detection area by using the determined second artificial intelligence model.

## Description

### Technical Field

The present disclosure relates to an augmented reality service for recognizing an object from an image by using an artificial intelligence model included in an external device, and an operation method thereof.

### Background Art

Augmented reality is a technology that overlays a virtual object on a physical environment space or a real world object in the real world to display them together, and an augmented reality device (e.g., smart glasses) using an augmented reality technology is used in everyday life, such as for an information search, directions, and camera photographing. In particular, smart glasses are worn as fashion items and are mainly used for outdoor activities.

Because an augmented reality device does not allow a touch operation due to characteristics of the augmented reality device, a hand interaction that uses, as an input means, a 3-dimensional pose and a hand gesture of a hand of a user is important as an input interface in order to provide an augmented reality service. An augmented reality device uses vision-based hand tracking technology for recognizing a hand of a user from an image photographed by using a camera mounted on the augmented reality device, without having to use a separate external input device, so as to guarantee freedom of both hands of the user. For an augmented reality device to recognize a hand pose (shape) or hand movement of a user, inference needs to be performed through an artificial intelligence (AI) model by using, as input data, image data corresponding to a specific hand pose (shape) or hand movement.

In general, because an augmented reality device is designed to have a small form factor for portability, a hardware specification is low, and thus, a processing time required to recognize a hand from an image may be long, and accordingly, it may be difficult to recognize a hand in real time and use the recognized had as an input means. In addition, an AI model embedded in an augmented reality device in an on-device manner is a low-performance model, and thus, hand recognition accuracy may be low.

### Disclosure of Invention

### Technical Solution

An aspect of the present disclosure provides an augmented reality device for recognizing an object by using an artificial intelligence model of an external device. An augmented reality device according to an embodiment of the present disclosure may include a camera, an inertial measurement unit (IMU) sensor including an accelerometer, a communication interface configured to perform data communication with a mobile device, a memory storing one or more instructions, and at least one processor configured to execute the one or more instructions. The at least one processor may be configured to obtain an image captured by using the camera and sensor data measured by using the accelerometer. The at least one processor may be configured to control the communication interface to transmit the obtained image and the obtained sensor data to the mobile device. The at least one processor may be configured to receive, from the mobile device, information about a direction, a type, and an object detection area of an object obtained from the image according to a result of object recognition performed by the mobile device by using a first artificial intelligence model included in the mobile device. The at least one processor may be configured to adjust a location of the object detection area, based on a value of the sensor data changed at a time point when the result of the object recognition is received from the mobile device. The at least one processor may be configured to determine a second artificial intelligence model for recognizing the object, based on the direction and the type of the object included in the object detection area of which the location has been adjusted. The at least one processor may be configured to recognize the object from the object detection area in the image by using the determined second artificial intelligence model.

Another aspect of the present disclosure provides a method by which an augmented reality device recognizes an object by using an artificial intelligence model of an external device. The method may include transmitting, to a mobile device, an image captured by using a camera and sensor data measured by using an accelerometer. The method may include receiving, from the mobile device, information about a direction, a type, and an object detection area of an object obtained from the image according to a result of object recognition performed by the mobile device by using a first artificial intelligence model included in the mobile device. The method may include adjusting a location of the object detection area, based on a value of the sensor data changed at a time point when the result of the object recognition is received from the mobile device. The method may include determining a second artificial intelligence model for recognizing the object, based on the direction and the type of the object included in the object detection area of which the location has been adjusted. The method may include recognizing the object from the object detection area in the image by using the determined second artificial intelligence model.

Another aspect of the present disclosure provides a mobile device. The mobile device according to an embodiment of the present disclosure may include a communication interface configured to perform data communication with an augmented reality device, a memory storing an artificial neural network model pre-trained to specify an object detection area where an object is detected from an input image and output classification information about a direction and a type of the object included in the object detection area, and at least one processor. The at least one processor may be configured to receive an image and sensor data from the augmented reality device through the communication interface. The at least one processor may be configured to input the received image into the artificial neural network model to obtain, from the image, object recognition result data including information about the object detection area and about the direction and the type of the object. The at least one processor may be configured to control the communication interface to transmit the obtained object recognition result data to the augmented reality device.

### Brief Description of Drawings

The present disclosure may be easily understood by a combination of the following detailed descriptions and accompanying drawings, and reference numerals refer to structural elements.
FIG. 1 is a conceptual diagram for describing an operation in which an augmented reality device of the present disclosure recognizes an object from an image by using a first artificial intelligence model included in a mobile device and a second artificial intelligence model included in the augmented reality device as an on-device.
FIG. 2 is a block diagram of components of an augmented reality device, according to an embodiment of the present disclosure.
FIG. 3 is a block diagram of components of a mobile device, according to an embodiment of the present disclosure.
FIG. 4 is a flowchart illustrating operations of an augmented reality device and a mobile device, according to an embodiment of the present disclosure.
FIG. 5 is a diagram illustrating an operation in which an augmented reality device receives an object recognition result from a mobile device, according to an embodiment of the present disclosure.
FIG. 6 is a flowchart illustrating an operation in which an augmented reality device adjusts a location of an object detection area, according to an embodiment of the present disclosure.
FIG. 7 is a diagram for describing sensor data changed according to location movement of an augmented reality device, according to an embodiment of the present disclosure.
FIG. 8 is a diagram illustrating location adjustment results of object detection areas, according to location movement of an augmented reality device, according to an embodiment of the present disclosure.
FIG. 9 is a diagram for describing an operation in which an augmented reality device changes a size of an object detection area in which a hand is detected, according to location movement of a hand of a user, according to an embodiment of the present disclosure.
FIG. 10 is a diagram illustrating an operation in which an augmented reality device recognizes a type of an object included in an object detection area by using an artificial intelligence model, according to an embodiment of the present disclosure.
FIG. 11 is a diagram for describing an artificial intelligence model trained according to a specific type of an object, according to an embodiment of the present disclosure.
FIG. 12 is a diagram illustrating an operation in which an augmented reality device displays a recognized object on an image, according to an embodiment of the present disclosure.

### Mode of the Invention

All terms used in the embodiment of present disclosure have been selected from commonly used terms as much as possible while considering the functions of the present disclosure. However, the terms may have different meanings according to the intention of one of ordinary skill in the art, precedent cases, or the appearance of new technologies. Also, some terms may be arbitrarily selected by the applicant, and in this case, the meaning of the selected terms will be described in detail in the detailed description of an embodiment. Thus, the terms used herein have to be defined based on the meaning of the terms together with the description throughout the specification.

An expression used in the singular may encompass the expression in the plural, unless it has a clearly different meaning in the context. Terms used herein, including technical or scientific terms, may have the same meaning as commonly understood by one of ordinary skill in the art described in the present specification.

Throughout the present disclosure, when a part "includes" or "comprises" an element, unless there is a particular description contrary thereto, the part may further include other elements, rather than excluding the other elements. In addition, terms such as "unit (or -er/or)" and "module" described in the present specification denote a unit that processes at least one function or operation, which may be implemented in hardware or software, or implemented in a combination of hardware and software.

The expression "configured to" used in the present disclosure may be replaced by, for example, suitable for", "having the capacity to", "designed to", "adapted to", made to", or "capable of", according to situations. The expression "configured to" may not necessarily indicate "specifically designed to" in terms of hardware. Instead, in a certain situation, the expression "system configured to" may indicate that the system may be "capable of" together with another device or components. For example, "a processor configured to perform A, B, and C" may indicate a dedicated processor (e.g., an embedded processor) for performing corresponding operations or indicate a generic-purpose processor (e.g., a central processing unit (CPU) or an application processor) performing the corresponding operations by executing one or more software programs stored in a memory.

Also, in the present disclosure, it will be understood that when one element is "connected" or "coupled" to another element, the elements may be directly connected or coupled to each other, but may alternatively be connected or coupled to each other with an intervening element therebetween, unless specified otherwise.

In the present disclosure, augmented reality displays a virtual image together in a physical environment space of the real world or displays a real object and a virtual image together.

In the present disclosure, an augmented reality device is a device capable of representing augmented reality, and for example, may include not only augmented reality glasses in the shape of glasses worn on a face of a user but also a head-mounted display apparatus (HMD) or an augmented reality helmet worn on a head of a user.

In the present disclosure, a mobile device is a portable device connected to an augmented reality device through a wireless network, and for example, may include a smartphone. However, the present disclosure is not limited thereto, and the mobile device may include any one of a laptop computer, a tablet personal computer (PC), an electronic book terminal, a digital broadcasting terminal, a personal digital assistant (PDA), a portable multimedia player (PMP), a navigation device, an MP3 player, and a camcorder.

In the present disclosure, a function related to artificial intelligence is performed through a processor and a memory. The processor may be configured as one or more processors. In this case, the one or more processors may be a general-purpose processor such as a central processing unit (CPU), an application processor (AP), or a digital signal processor (DSP), a dedicated graphics processor such as a graphics processing unit (GPU) or a vision processing unit (VPU), or a dedicated artificial intelligence processor such as a neural processing unit (NPU). The one or more processors may control input data to be processed according to predefined operation rules or an artificial intelligence model stored in a memory. Alternatively, when the one or more processors are a dedicated artificial intelligence processor, the dedicated artificial intelligence processor may be designed with a hardware structure specialized for processing a specific artificial intelligence model.

The predefined operation rules or artificial intelligence model may be generated via training. Here, being generated via training means that the predefined operation rules or artificial intelligence model set to perform desired characteristics (or purposes) are generated by training a basic artificial intelligence model with a learning algorithm that utilizes a large number of training data. A training process may be performed by a device for performing artificial intelligence or a separate server and/or system. Examples of the learning algorithm may include supervised learning, unsupervised learning, semi-supervised learning, and reinforcement learning, but are not limited thereto.

In the present disclosure, the artificial intelligence model may include a plurality of neural network layers. Each of the neural network layers includes a plurality of weight values, and performs a neural network arithmetic operation via an arithmetic operation between an arithmetic operation result of a previous layer and the plurality of weight values. The plurality of weight values in each of the neural network layers may be optimized by a result of training an artificial intelligence model. For example, the plurality of weight values may be updated to reduce or minimize a loss value or a cost value obtained by the artificial intelligence model during the training process. An artificial neural network model may include a deep neural network (DNN) and may be, for example, a convolutional neural network (CNN), a DNN, a recurrent neural network (RNN), a restricted Boltzmann machine (RBM), a deep belief network (DBN), a bidirectional recurrent DNN (BRDNN), or deep Q-networks (DQN) but is not limited thereto.

Hereinafter, an embodiment of the present disclosure will be described in detail with reference to the accompanying drawings such that one of ordinary skill in the art may easily implement the embodiment of the present disclosure. However, the present disclosure may be implemented in various different forms and is not limited to the embodiment described herein.

Hereinafter, embodiments of the present disclosure will be described in detail with reference to accompanying drawings.

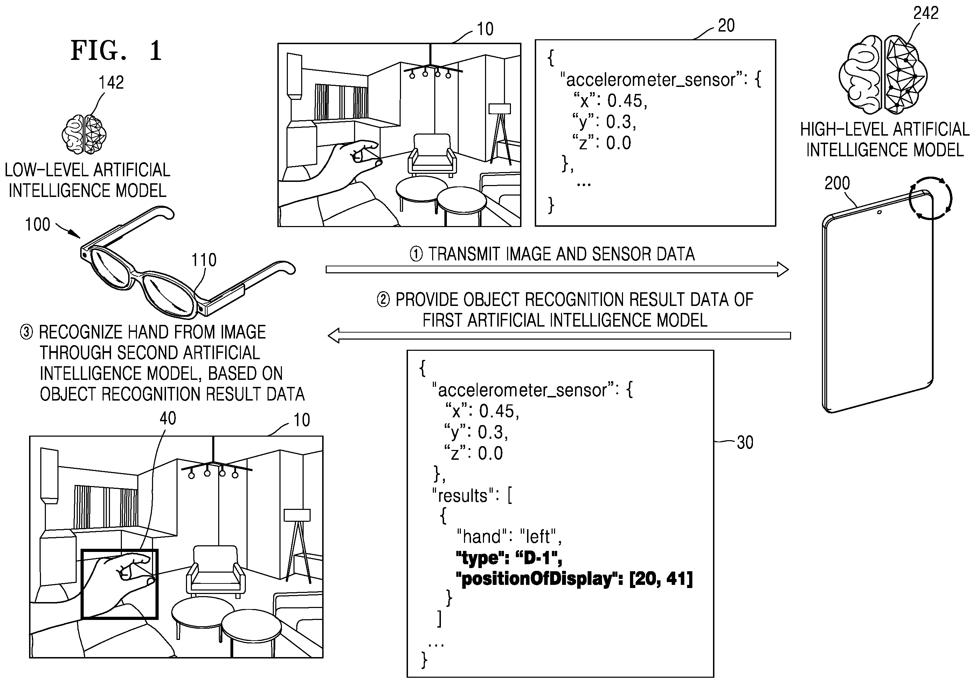

FIG. 1 is a conceptual diagram for describing an operation in which an augmented reality device 100 of the present disclosure recognizes an object 40 from an image 10 by using a first artificial intelligence model 242 included in a mobile device 200 and a second artificial intelligence model 142 included in the augmented reality device 100 as an on-device.

The augmented reality device 100 is a device capable of representing augmented reality, and may include, for example, augmented reality glasses having the shape of glasses worn on a face of a user. In FIG. 1, the augmented reality device 100 is illustrated as augmented reality glasses but is not limited thereto. For example, the augmented reality device 100 may be implemented as a head-mounted display apparatus (HMD) or an augmented reality helmet worn on a head part of a user.

The mobile device 200 may include, for example, a smartphone. In FIG. 1, the mobile device 200 is illustrated as a smartphone but is not limited thereto. The mobile device 200 may include, for example, any one of a laptop computer, a tablet personal computer (PC), an electronic book terminal, a digital broadcasting terminal, a personal digital assistant (PDA), a portable multimedia player (PMP), a navigation device, an MP3 player, and a camcorder.

Referring to FIG. 1, the augmented reality device 100 may be connected to the mobile device 200 through a wireless network. In an embodiment of the present disclosure, the augmented reality device 100 may be connected to the mobile device 200 through a short-range wireless communication network and perform data transmission/reception. For example, the augmented reality device 100 may be connected through the short-range wireless communication network, such as Bluetooth, Bluetooth low energy (BLE), or Wi-Fi direct.

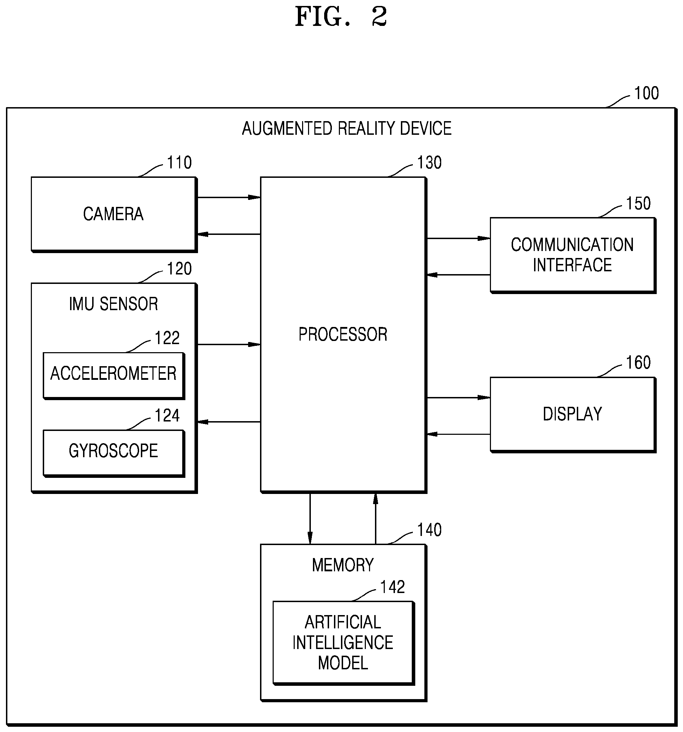

Referring to FIG. 1, the augmented reality device 100 transmits the image 10 and sensor data 20 to the mobile device 200 (operation ①). In an embodiment of the present disclosure, the augmented reality device 100 may include a camera 110 and an inertial measurement unit (IMU) sensor 120 (see FIG. 2). The augmented reality device 100 may obtain the image 10 by photographing a real space including at least one object, by using the camera 110. The augmented reality device 100 may obtain the sensor data 20 by measuring, by using an accelerometer 122 (see FIG. 2) of the IMU sensor 120, changes in movements of the augmented reality device 100 in a longitudinal direction (x-axis direction), a lateral direction (y-axis direction), and a height direction (z-axis direction). In the embodiment shown in FIG. 1, the sensor data 20 may include 0.45 as a measurement value in the x-axis direction, 0.3 as a measurement value in the y-axis direction, and 0.0 as a measurement value in the z-axis direction. The augmented reality device 100 may transmit, through the short-range wireless communication network, the image 10 and the sensor data 20 to the mobile device 200.

The mobile device 200 provides, to the augmented reality device 100, object recognition result data 30 of the first artificial intelligence model 242 (operation ②). In an embodiment of the present disclosure, the first artificial intelligence model 242 may be an artificial neural network model pre-trained according to a learning algorithm to specify an object detection area in which an object is detected from an input image and output classification information about a direction and a type of the object included in the object detection area. The first artificial intelligence model 242 may be implemented as, for example, a convolutional neural network (CNN). However, the present disclosure is not limited thereto, and the first artificial intelligence model 242 may be implemented as at least one of, for example, a recurrent neural network (RNN), a restricted Boltzmann machine (RBM), a deep belief network (DBN), a bidirectional recurrent deep neural network (BRDNN), and a deep Q-network. The mobile device 200 may apply, as input data, the image 10 received from the augmented reality device 100 to the first artificial intelligence model 242, and predict the direction and the type of the object in the object detection area by performing inference using the first artificial intelligence model 242. The mobile device 200 may obtain the object recognition result data 30 from the image 10 through the inference using the first artificial intelligence model 242. In the embodiment shown in FIG. 1, the object recognition result data 30 may include information about a detection area (positionOfDisplay) in which a hand of the user is detected in the image 10, a direction of the hand (e.g., "left"), and a type of the hand (e.g., "D-1").

The mobile device 200 may transmit, through the short-range wireless communication network, the object recognition result data 30 to the augmented reality device 100.

The augmented reality device 100 recognizes the hand 40 from the image 10 through the second artificial intelligence model 142, based on the object recognition result data 30 (operation ③). The augmented reality device 100 may specify an object detection area in which an object is detected among the entire area of the image 10, based on the object recognition result data 30 received from the mobile device 200. When a location of the augmented reality device 100 is changed due to a movement of the user, an image obtained in real time may be different from the image 10 transmitted to the mobile device 200. In this case, the augmented reality device 100 may adjust a location of the object detection area by using a value of sensor data measured by using the accelerometer 122 (see FIG. 2).

The augmented reality device 100 may recognize the hand 40 of the user by performing inference of applying, as input data, the object detection area in the image 10 by using the second artificial intelligence model 142. In an embodiment of the present disclosure, the second artificial intelligence model 142 may be an artificial neural network model trained to recognize only an object corresponding to a pre-determined specific type of the object from an input image according to a learning algorithm. For example, the second artificial intelligence model 142 may include a plurality of artificial neural network models trained to recognize hands corresponding to a plurality of types, respectively, according to a direction of a hand (e.g., a left hand or a right hand) and a shape of the hand (e.g., a shape, a form, or a pose of fingers).

The second artificial intelligence model 142 is a model trained to recognize only a hand of a pre-determined specific type and may have a less capacity than the first artificial intelligence model 242 that is a model limitlessly recognizing an object of all types. Compared with the first artificial intelligence model 242, the second artificial intelligence model 142 may be a model in which a throughput required to recognize an object is low, a processing speed is slow, and accuracy of object recognition is low. The first artificial intelligence model 242 may be a high-level model with relatively high accuracy compared with the second artificial intelligence model 142, and the second artificial intelligence model 142 may be a low-level model compared with the first artificial intelligence model 242.

The augmented reality device 100 may display, on the image 10, the hand 40 of the user recognized by using the second artificial intelligence model 142. In an embodiment of the present disclosure, the augmented reality device 100 may display a bounding box in an area of the image 10 including the recognized hand 40.

Because the augmented reality device 100 does not allow a touch operation due to characteristics thereof, a hand interaction that uses, as an input means, a pose or a finger shape of a hand of a user is important as an input interface in order to provide an augmented reality service. An augmented reality device uses vision-based hand tracking technology for recognizing a hand of a user from an image photographed by using a camera mounted on the augmented reality device, without having to use a separate external input device, so as to guarantee freedom of both hands of the user. For the augmented reality device to recognize a hand pose or a finger shape of the user, object recognition needs to be performed through an artificial intelligence model by using, as input data, image data corresponding to a specific hand pose or finger shape.

In general, because the augmented reality device is designed to have a small form factor for portability, a hardware specification is low, and thus, a processing time required to recognize a hand from an image may be long. Accordingly, in a case that the augmented reality device recognizes a hand by using a low-level artificial intelligence model (the second artificial intelligence model 142 in the embodiment of FIG. 1) embedded therein in an on-device manner, a processing speed is low and there may be limitations in real-time processing. In addition, because the low-level artificial intelligence model embedded in the augmented reality device 100 in the on-device manner has low accuracy of object recognition, a hand of a user may not be accurately recognized, and thus, user convenience may deteriorate.

In order to solve the technical problem, the present disclosure provides the augmented reality device 100 and an operation method thereof, wherein the augmented reality device 100 recognizes an object by using object recognition result data using a high-level artificial intelligence model (the first artificial intelligence model 242 in the embodiment of FIG. 1) included in an external device.

The augmented reality device 100 according to an embodiment of FIG. 1 may receive data related to a result of object recognition performed by the mobile device 200 by using the first artificial intelligence model 242 that is a relatively high-level artificial intelligence model, specify a direction and a type of an object based on the received object recognition result data, and recognize the object (a hand of a user) by using the second artificial intelligence model 142 that is a low-level artificial intelligence model trained to recognize only an object corresponding to a direction and a type of a specific object, thereby reducing a processing time and realizing real-time processing of hand recognition. Also, the augmented reality device 100 according to an embodiment of the present disclosure specifies the direction and the type of the object, based on the object recognition result data 30 of the first artificial intelligence model 242 that is a high-level artificial intelligence model, thereby providing technical effects of improving recognition accuracy of a pose or a finger shape of a hand.

FIG. 2 is a block diagram of components of the augmented reality device 100, according to an embodiment of the present disclosure.

Referring to FIG. 2, the augmented reality device 100 may include the camera 110, the IMU sensor 120, a processor 130, a memory 140, a communication interface 150, and a display 160. The camera 110, the IMU sensor 120, the processor 130, the memory 140, the communication interface 150, and the display 160 may be electrically and/or physically connected to each other. In FIG. 2, only essential components for describing operations of the augmented reality device 100 are illustrated, and components included in the augmented reality device 100 are not limited to those shown in FIG. 2. In an embodiment of the present disclosure, the augmented reality device 100 may be implemented as a portable device, and in this case, the augmented reality device 100 may further include a battery supplying power to the camera 110, the IMU sensor 120, the processor 130, the communication interface 150, and the display 160.

The camera 110 is configured to obtain an image of a real space by photographing the real space. In an embodiment of the present disclosure, the camera 110 may obtain an image including a hand by photographing the hand of a user. The camera 110 may include a lens module, an image sensor, and an image processing module. The camera 110 may obtain a still image or a video of the real space by using the image sensor (e.g., a complementary metal-oxide semiconductor (CMOS) or a charge-coupled device (CCD)). The video may include a plurality of image frames obtained in real time by photographing, by using the camera 110, an object in the real space including the hand of the user. The image processing module may encode a still image including a single image frame or video data including a plurality of image frames, which is obtained through the image sensor, and transmit the same to the processor 130.

The IMU sensor 120 is a sensor configured to measure a moving speed, a direction, an angle, and gravitational acceleration of the augmented reality device 100. The IMU sensor 120 may include the accelerometer 122 and a gyroscope 124. Although not illustrated in FIG. 2, the IMU sensor 120 may further include a magnetometer.

The accelerometer 122 is a sensor configured to measure acceleration according to a change in movement when dynamic force, such as acceleration force, vibration force, or impact force, is generated in the augmented reality device 100. In an embodiment of the present disclosure, the accelerometer 122 may be configured as a 3-axis accelerometer configured to measure acceleration in a longitudinal direction, a lateral direction, and a height direction.

The gyroscope 124 is a sensor configured to measure angular velocity that is an amount of change in rotation of the augmented reality device 100. In an embodiment of the present disclosure, the gyroscope 124 may include a 3-axis gyroscope measuring roll angular velocity, pitch angular velocity, and yaw angular velocity.

In an embodiment of the present disclosure, the IMU sensor 120 may obtain sensor data by measuring acceleration in a longitudinal direction, a lateral direction, and a height direction according to a change in movement of the augmented reality device 100, by using the accelerometer 122. The IMU sensor 120 may provide the sensor data to the processor 130.

The processor 130 may execute one or more instructions of a program stored in the memory 140. The processor 130 may include a hardware component performing arithmetic operations, logic operations, input/output operations, and image processing. In FIG. 2, the processor 130 is illustrated as one element, but is not limited thereto. In an embodiment of the present disclosure, the processor 130 may include a plurality of elements. The processor 130 may include a general-purpose processor, such as a central processing unit (CPU), an application processor (AP), or a digital signal processor (DSP), a graphic-dedicated processor, such as a graphics processing unit (GPU) or a vision processing unit (VPU), or an artificial intelligence-dedicated processor, such as a neural processing unit (NPU). The processor 130 may control input data to be processed according to the artificial intelligence model 142 or pre-defined operating rule stored in the memory 140. Alternatively, when the processor 130 is an artificial intelligence-dedicated processor, the artificial intelligence-dedicated processor may be designed in a hardware structure specialized for processing by a specific artificial intelligence model (e.g., the artificial intelligence model 142).

The memory 140 may include, for example, at least one type of storage medium among a flash memory type, a hard disk type, a multimedia card micro type, a card type memory (for example, a secure digital (SD) or an extreme digital (XD) memory), random access memory (RAM), static RAM (SRAM), read-only memory (ROM), electrically erasable programmable ROM (EEPROM), programmable ROM (PROM), and an optical disk.

The memory 140 may store instructions related to operations in which the augmented reality device 100 recognizes an object from an image. In an embodiment of the present disclosure, the memory 140 may store at least one of instructions, an algorithm, a data structure, a program code, and an application program, which may be read by the processor 130. The instructions, algorithm, data structure, and program code, which are stored in the memory 140, may be implemented in, for example, a programming or scripting language, such as C, C++, Java, or assembler.

In an embodiment below, the processor 130 may be implemented by executing instructions or program codes stored in the memory 140.

The processor 130 may obtain, from the camera 110, an image of a real space including a hand of a user. In an embodiment of the present disclosure, the processor 130 may obtain video data including a plurality of image frames captured in real time by the camera 110.

The processor 130 may obtain, from the IMU sensor 120, sensor data including acceleration measurement values in a longitudinal direction, a lateral direction, and a height direction, according to a change in movement of the augmented reality device 100.

The processor 130 may control the communication interface 150 to transmit, to an external device, the image obtained through the camera 110 and the sensor data measured by the IMU sensor 120. The communication interface 150 is configured to perform data communication with the external device or a server. The communication interface 150 may perform data communication with the external device or the server by using at least one of data communication methods including, for example, wired local area network (LAN), wireless LAN, Wi-Fi, Bluetooth, ZigBee, Wi-Fi direct (WFD), infrared data association (IrDA), Bluetooth low energy (BLE), near field communication (NFC), wireless broadband Internet (Wibro), world interoperability for microwave access (WiMAX), shared wireless access protocol (SWAP), wireless gigabit alliance (WiGig), and radio frequency (RF) communication. The external device is a device connected to the augmented reality device 100 through a wireless communication network, and may include, for example, a mobile device such as a smartphone or a tablet PC. However, the external device is not limited thereto and may include, for example, any one of a laptop computer, a desktop PC, an electronic book terminal, a digital broadcasting terminal, a PDA, a PMP, a navigation device, an MP3 player, and a camcorder.

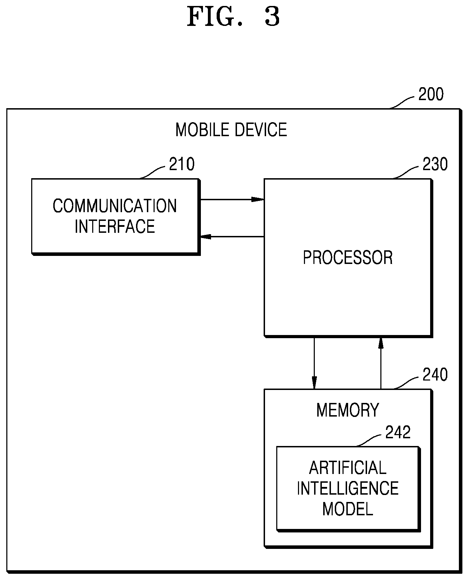

The processor 130 may receive a result of object recognition of an image from the mobile device through the communication interface 150. In an embodiment of the present disclosure, the processor 130 may receive information about an object detection area, a direction of an object, and a type of the object, which are obtained from the image, according to the result of the object recognition performed by the mobile device by using the artificial intelligence model 242 (see FIGS. 1 and 3) included in the mobile device. The object detection area is an area where an object is predicted to be detected among an entire area of the image, and may be obtained based on a result of inference by the artificial intelligence model 242. For example, in a case that the object is a hand of a user, the direction of the object may include information about whether the hand is a left hand or a right hand, and the type of the object may include classification information obtained by classifying a pose or finger shape of the hand of the user. The artificial intelligence model 242 included in the mobile device may be an artificial neural network model pre-trained according to a learning algorithm to specify the object detection area in which an object is detected from an input image and output classification information about a direction and a type of the object included in the object detection area. The artificial intelligence model 242 will be described in detail with reference to FIG. 3.

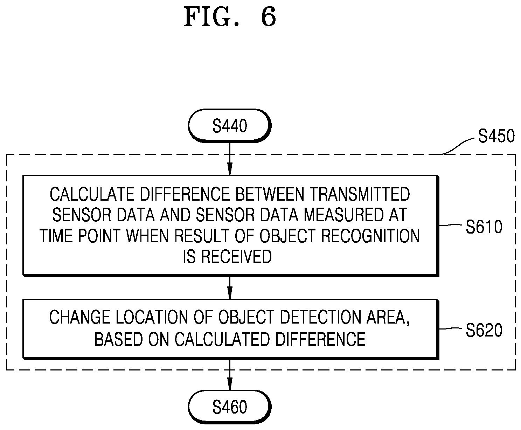

The processor 130 may adjust a location of the object detection area, based on a value of the sensor data changed at a time point when the result of the object recognition is received from the mobile device. The processor 130 may obtain the sensor data about the movement of the augmented reality device 100, which is measured in real time by the accelerometer 122. The processor 130 may calculate a difference between the sensor data transmitted to the mobile device and the sensor data measured at the time point when the result of the object recognition is received from the mobile device, and change the location of the object detection area based on the calculated difference. In an embodiment of the present disclosure, the processor 130 may move the location of the object detection area along an x-axis direction and a y-axis direction by the difference in the sensor data calculated for each of the x-axis direction and the y-axis direction. A specific embodiment in which the processor 130 adjusts the location of the object detection area will be described in detail with reference to FIGS. 6 to 8.

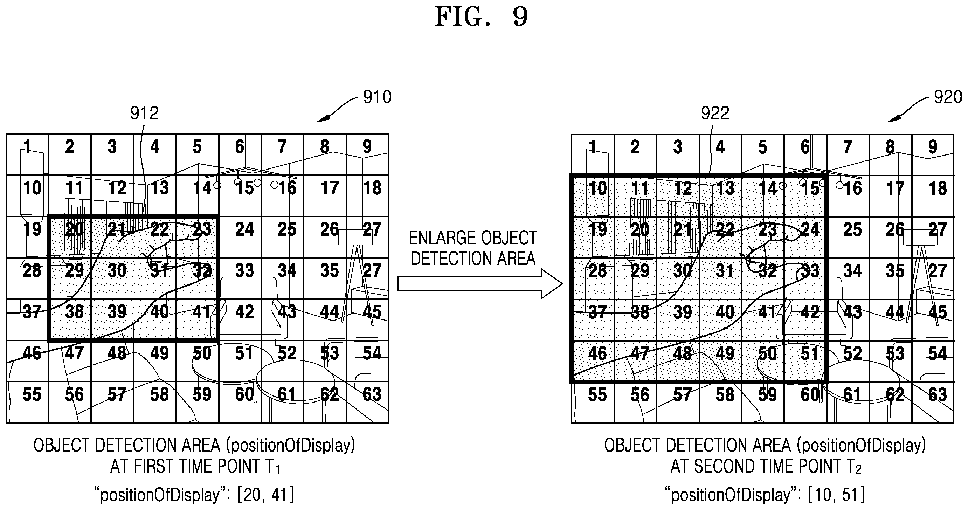

In an embodiment of the present disclosure, the processor 130 may increase a size of the object detection area by a predetermined ratio when a location of the hand of the user is changed at the time point when the result of the object recognition is received from the mobile device. A specific embodiment in which the processor 130 increases the size of the object detection area will be described in detail with reference to FIG. 9.

The processor 130 may determine the artificial intelligence model 142 for recognizing the object, based on the direction and the type of the object included in the object detection area. The artificial intelligence model 142 may be included in the augmented reality device 100 in an on-device manner. In an embodiment of the present disclosure, an algorithm or program code related to the artificial intelligence model 142 may be stored in a storage space of the memory 140. The artificial intelligence model 142 may be an artificial neural network model trained to recognize only an object corresponding to a pre-determined specific type of an object from an input image, according to a learning algorithm. The artificial intelligence model 142 may be the same as the second artificial intelligence model 142 illustrated in and described with reference to FIG. 1. For example, the artificial intelligence model 142 may include a plurality of artificial neural network models trained to recognize hands corresponding to a plurality of types, respectively, according to a direction of a hand (e.g., a left hand or a right hand) and a shape of the hand (e.g., a shape, a form, or a pose of fingers). The plurality of artificial neural network models may be implemented as, for example, a convolutional neural network (CNN). However, the present disclosure is not limited thereto, and the artificial intelligence model 142 may be implemented as at least one of, for example, a recurrent neural network (RNN), a restricted Boltzmann machine (RBM), a deep belief network (DBN), a bidirectional recurrent deep neural network (BRDNN), and a deep Q-network.

The artificial intelligence model 142 included in the augmented reality device 100 in an on-device manner is a model trained to recognize only a hand of a pre-determined specific type, and may have less capacity compared to the artificial intelligence model 242 (see FIGS. 1 and 3) included in the mobile device. Compared with first artificial intelligence model 242 included in the mobile device, the artificial intelligence model 142 may be a model in which a throughput required to recognize an object is low, a processing speed is slow, and accuracy of object recognition is low. The artificial intelligence model 142 may be a low-level model having relatively low accuracy compared with the artificial intelligence model 242 included in the mobile device.

In FIG. 2, the artificial intelligence model 142 is included in the memory 140 but the present disclosure is not limited thereto. In an embodiment of the present disclosure, the artificial intelligence model 142 may be included in the processor 130 or may be integrated with the processor 130, as an NPU.

In an embodiment of the present disclosure, the processor 130 may select, from among the plurality of artificial neural network models, an artificial neural network model trained to recognize only an object of a type (e.g., a type classified according to a pose or a finger shape of a hand) received according to the result of the object recognition by the mobile device.

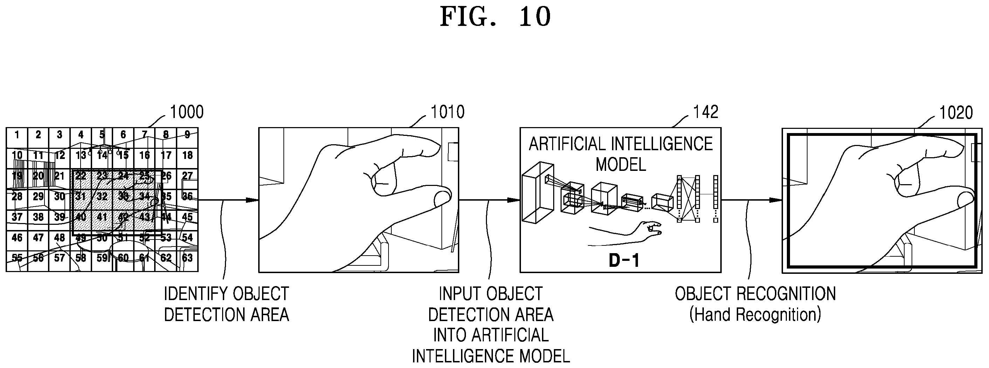

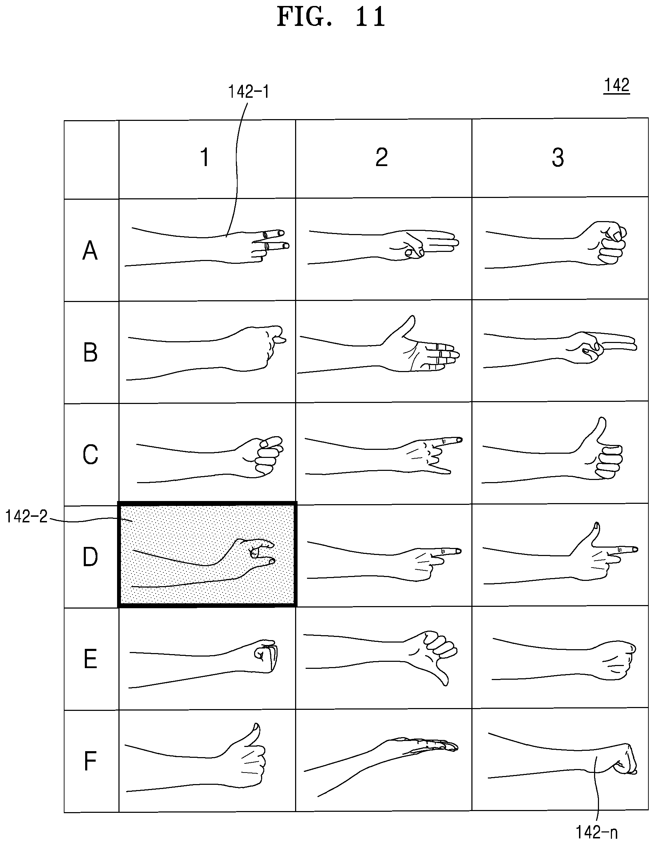

The processor 130 may recognize the object from the object detection area in the image by using the determined artificial intelligence model 142. In an embodiment of the present disclosure, the processor 130 may recognize a hand by inputting the object detection area of the image into the artificial intelligence model 142 trained to recognize a hand of a specific hand pose or a specific finger shape, and performing inference using the artificial intelligence model 142. In the present disclosure, the inference may refer to an operation of predicting a specific type of an object from an image by using the trained artificial intelligence model 142 and outputting the predicted type. The processor 130 may obtain a type of the hand by performing the inference using the artificial intelligence model 142. A specific embodiment in which the processor 130 recognizes the type of the hand from the object detection area of the image by using the artificial intelligence model 142 will be described in detail with reference to FIGS. 10 and 11.

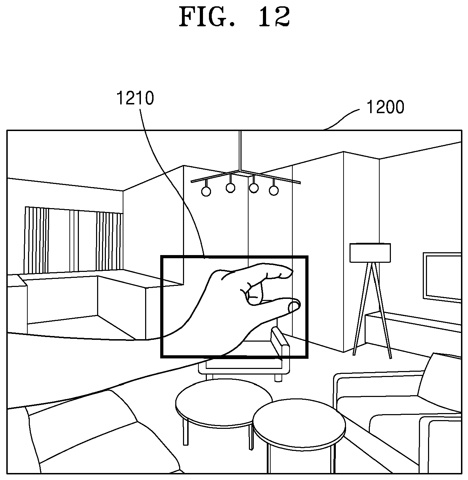

The processor 130 may perform image rendering and display a result of object recognition on the image. The processor 130 may display the image on the display 160 and display a bounding box in an area including the recognized hand among the entire area of the image. A specific embodiment in which the processor 130 displays the bounding box on the display 160 will be described in detail with reference to FIG. 12.

The display 160 is configured to display an image captured by the camera 110. As described above, the display 160 may display the bounding box in the area including the recognized hand in the image, according to control by the processor 130. The display 160 may include at least one of, for example, a liquid crystal display, a thin-film transistor-liquid crystal display, an organic light-emitting diode, a flexible display, a 3-dimensional (3D) display, or an electrophoretic display. In an embodiment of the present disclosure, when the augmented reality device 100 is configured as augmented reality glasses, the display 160 may further include an optical engine projecting a virtual image (e.g., a bounding box). The optical engine may be configured to generate light of a virtual image and may be configured as a projector including an image panel, a lighting optical system, and a projection optical system. The optical engine may be arranged in, for example, a frame or temples of the augmented reality glasses.

FIG. 3 is a block diagram of components of the mobile device 200, according to an embodiment of the present disclosure.

The mobile device 200 is a portable device connected to the augmented reality device 100 through a wireless communication network. The mobile device 200 may include, for example, a smartphone. However, the present disclosure is not limited thereto, and the mobile device 200 may include any one of a laptop computer, a tablet personal computer (PC), an electronic book terminal, a digital broadcasting terminal, a personal digital assistant (PDA), a portable multimedia player (PMP), a navigation device, an MP3 player, and a camcorder. In an embodiment of the present disclosure, the mobile device 200 may be replaced with a server including the artificial intelligence model 242.

Referring to FIG. 3, the mobile device 200 may include a communication interface 210, a processor 230, and a memory 240. The communication interface 210, the processor 230, and the memory 240 may be electrically and/or physically connected to each other. In FIG. 3, only essential components for describing operations of the mobile device 200 are illustrated, and components included in the mobile device 200 are not limited to those shown in FIG. 3. In an embodiment of the present disclosure, the mobile device 200 may further include a display displaying a user interface or an image. For example, the display may be configured as a touch screen including a touch pad for receiving a touch input of a user. In an embodiment of the present disclosure, the mobile device 200 may further include a battery supplying power to the communication interface 210 and the processor 230.

The communication interface 210 is connected to the augmented reality device 100 through a short-range wireless communication method and is configured to perform data communication with the augmented reality device 100. In an embodiment of the present disclosure, the communication interface 210 may be configured, for example, as at least one hardware module from among Wi-Fi, Wi-Fi direct (WFD) communication unit, a Bluetooth communication unit, a Bluetooth low energy (BLE) communication unit, a near field communication unit (NFC), a ZigBee communication unit, an Ant+ communication unit, and a microwave (µWave) communication unit, and may perform data communication with the augmented reality device 100 by using the hardware communication module. In an embodiment of the present disclosure, the communication interface 210 may be connected to the augmented reality device 100 through the short-range wireless communication network, such as Bluetooth, BLE, or WFD, and transmit or receive data.

The communication interface 210 may receive an image and sensor data from the augmented reality device 100 through the short-range wireless communication network.

The processor 230 may execute one or more instructions of a program stored in the memory 240. The processor 230 may include a hardware component performing arithmetic operations, logic operations, input/output operations, and signal processing. The processor 230 may include, for example, a general-purpose processor, such as a central processing unit (CPU), an application processor (AP), or a digital signal processor (DSP), a graphic-dedicated processor, such as a graphics processing unit (GPU) or a vision processing unit (VPU), or an artificial intelligence-dedicated processor, such as a neural processing unit (NPU). The processor 230 may control input data to be processed according to the artificial intelligence model 242 or pre-defined operating rule stored in the memory 240. Alternatively, in a case that the processor 230 is an artificial intelligence-dedicated processor, the artificial intelligence-dedicated processor may be designed in a hardware structure specialized for processing by a specific artificial intelligence model (e.g., the artificial intelligence model 242).

In FIG. 3, the processor 230 is illustrated as one element, but is not limited thereto. In an embodiment of the present disclosure, the processor 230 may include a plurality of elements.

The memory 240 may include, for example, at least one type of storage medium among a flash memory type, a hard disk type, a multimedia card micro type, a card type memory (for example, a secure digital (SD) or an extreme digital (XD) memory), random access memory (RAM), static RAM (SRAM), read-only memory (ROM), electrically erasable programmable ROM (EEPROM), programmable ROM (PROM), and an optical disk.

The memory 240 may store at least one of instructions, an algorithm, a data structure, a program code, and an application program, which may be read by the processor 230. In an embodiment of the present disclosure, an algorithm or program code related to the artificial intelligence model 242 may be stored in the memory 240. In an embodiment of the present disclosure, the artificial intelligence model 242 may be an artificial neural network model pre-trained according to a learning algorithm to specify an object detection area in which an object is detected from an input image and output classification information about a direction and a type of the object included in the object detection area. The artificial intelligence model 242 may be the same as the first artificial intelligence model 242 illustrated in and described with reference to FIG. 1. In an embodiment of the present disclosure, the artificial intelligence model 242 may be implemented as a convolutional neural network (CNN). For example, the artificial intelligence model 242 may be TensorFlow (TF) lite. However, the present disclosure is not limited thereto, and the artificial intelligence model 242 may be implemented as at least one of, for example, a recurrent neural network (RNN), a restricted Boltzmann machine (RBM), a deep belief network (DBN), a bidirectional recurrent deep neural network (BRDNN), and a deep Q-network.

The artificial intelligence model 242 may be a model in which throughput required to recognize an object is high and accuracy of object recognition is high compared with the artificial intelligence model 142 (see FIGS. 1 and 2) embedded in the augmented reality device 100 as an on-device. The artificial intelligence model 242 may be a relatively high-level model compared with the artificial intelligence model 142 included in the augmented reality device 100 as an on-device. Capacity of an algorithm or program code of the artificial intelligence model 242 may be greater than capacity of the artificial intelligence model 142 included in the augmented reality device 100. A high-capacity and high-level model may indicate that there are many parameters during a process of recognizing an object from an input image.

In FIG. 3, the artificial intelligence model 242 is included in the memory 240 but the present disclosure is not limited thereto. In an embodiment of the present disclosure, the artificial intelligence model 242 may be included in the processor 230 or may be integrated with the processor 230, as an NPU.

The processor 230 may input an image received from the augmented reality device 100 into the artificial intelligence model 242 and recognize an object from the image by using the artificial intelligence model 242. In an embodiment of the present disclosure, the processor 230 may perform inference through the artificial intelligence model 242 to obtain, from the image, information about an object detection area in which an object is detected, a direction of the object, and a type of the object. For example, the processor 230 may specify the object detection area in which a hand is detected from the image, and obtain information about a direction of the hand among a left hand and a right hand, and a type of the hand, such as a pose or a finger shape of the hand.

The processor 230 may transmit object recognition result data obtained by using the artificial intelligence model 242 to the augmented reality device 100 through the communication interface 210. In an embodiment of the present disclosure, the processor 230 may transmit an object detection area obtained based on a result of object recognition, and information about a direction of an object and a type of the object to the augmented reality device 100 through the communication interface 210.

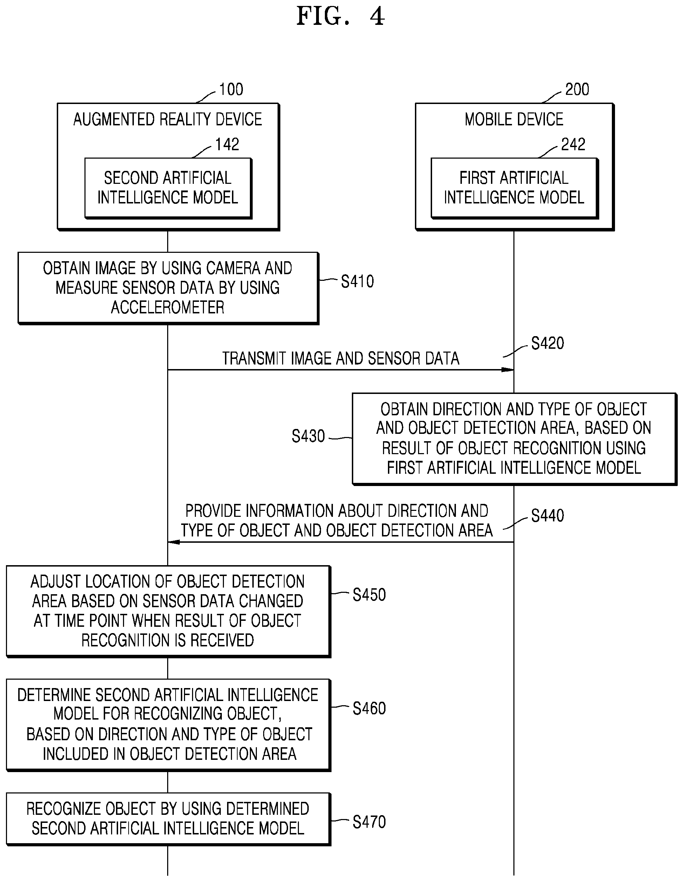

FIG. 4 is a flowchart illustrating operations of the augmented reality device 100 and the mobile device 200, according to an embodiment of the present disclosure.

Referring to FIG. 4, the augmented reality device 100 may include the second artificial intelligence model 142 and the mobile device 200 may include the first artificial intelligence model 242. The second artificial intelligence model 142 of FIG. 4 may be the same as the artificial intelligence model 142 of FIG. 2, and the first artificial intelligence model 242 of FIG. 4 may be the same as the artificial intelligence model 242 of FIG. 3. Redundant descriptions about the first artificial intelligence model 242 and the second artificial intelligence model 142 will be omitted.

In operation S410, the augmented reality device 100 may obtain an image by using a camera and measure sensor data by using an accelerometer. In an embodiment of the present disclosure, the augmented reality device 100 may obtain the image by photographing an object in a real space including a hand of a user by using the camera. In an embodiment of the present disclosure, the sensor data may be obtained by measuring acceleration values of the augmented reality device 100 in an x-axis direction, a y-axis direction, and a z-axis direction by using the accelerometer 122 (see FIG. 2) of the IMU sensor 120 (see FIG. 2).

In operation S420, the augmented reality device 100 may transmit the image and the sensor data to the mobile device 200. In an embodiment of the present disclosure, the augmented reality device 100 may transmit the image and the sensor data to the mobile device 200 connected through a wireless communication network. The augmented reality device 100 may transmit the image and the sensor data to the mobile device 200 by using a short-range wireless communication network, for example, Bluetooth, BLE, or WFD.

In operation S430, the mobile device 200 may obtain information about a direction and a type of an object and an object detection area, according to a result of object recognition using the first artificial intelligence model 242. In an embodiment of the present disclosure, the mobile device 200 may input the image received from the augmented reality device 100 in operation S420 into the first artificial intelligence model 242 and recognize the object from the image by using the first artificial intelligence model 242. In an embodiment of the present disclosure, the mobile device 200 may perform inference through the first artificial intelligence model 242 to obtain, from the image, the information about the object detection area in which the object is detected, and the direction and the type of the object. For example, the mobile device 200 may specify the object detection area in which a hand is detected from the image, and obtain information about a direction of the hand among a left hand and a right hand, and a type of the hand, such as a pose or a finger shape of the hand.

In operation S440, the mobile device 200 provides, to the augmented reality device 100, the information about the direction and type of the object and the object detection area. In an embodiment of the present disclosure, the mobile device 200 may transmit the information about the direction and type of the object and the object detection area, which are obtained based on the result of object recognition using the first artificial intelligence model 242, to the augmented reality device 100 through the short-range wireless communication network.

In operation S450, the augmented reality device 100 adjusts a location of the object detection area, based on the sensor data changed at a time point when the result of object recognition is received. The augmented reality device 100 may obtain the sensor data about movement of the augmented reality device 100 in real time by using the accelerometer 122. In an embodiment of the present disclosure, the augmented reality device 100 may calculate a difference between the sensor data transmitted to the mobile device 200 and the sensor data measured at the time point when the result of object recognition is received from the mobile device 200, and change the location of the object detection area based on the calculated difference. In an embodiment of the present disclosure, the augmented reality device 100 may move the location of the object detection area along an x-axis direction and a y-axis direction by the difference in the sensor data calculated for each of the x-axis direction and the y-axis direction.

In operation S460, the augmented reality device 100 determines the second artificial intelligence model 142 for recognizing an object, based on the direction and type of the object included in the object detection area. In an embodiment of the present disclosure, the second artificial intelligence model 142 may include a plurality of artificial neural network models trained to recognize hands corresponding to a plurality of types, respectively, according to a direction of a hand (e.g., a left hand or a right hand) and a shape of the hand (e.g., a shape, a form, or a pose of fingers). The plurality of artificial neural network models may be implemented as, for example, a convolutional neural network (CNN). However, the present disclosure is not limited thereto, and the plurality of artificial neural network models may be implemented as at least one of, for example, a recurrent neural network (RNN), a restricted Boltzmann machine (RBM), a deep belief network (DBN), a bidirectional recurrent deep neural network (BRDNN), and a deep Q-network. In an embodiment of the present disclosure, the augmented reality device 100 may select, from among the plurality of artificial neural network models, an artificial neural network model trained according to a type (e.g., a type classified according to a pose or a finger shape of a hand) of an object, received according to the result of the object recognition by the mobile device 200.

In operation S470, the augmented reality device 100 recognizes an object by using the determined second artificial intelligence model 142. In an embodiment of the present disclosure, the augmented reality device 100 may recognize a hand by inputting the object detection area of the image into the second artificial intelligence model 142 trained to recognize a hand of a specific hand pose or a specific finger shape, and performing inference using the second artificial intelligence model 142. The augmented reality device 100 may obtain a type of the hand based on a result of object recognition using the second artificial intelligence model 142.

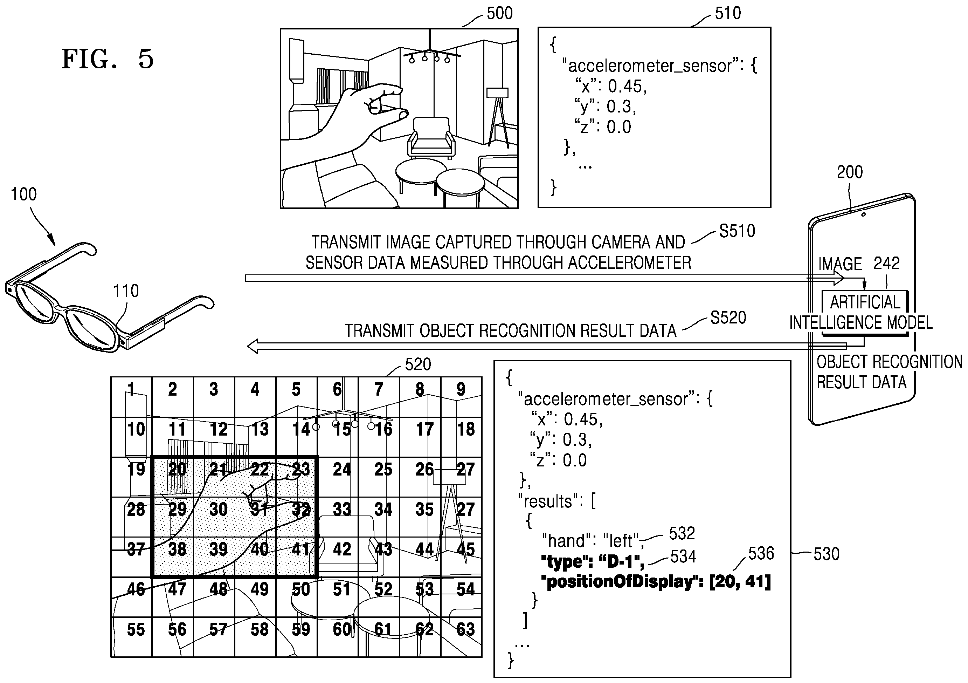

FIG. 5 is a diagram illustrating an operation in which the augmented reality device 100 receives an object recognition result from the mobile device 200, according to an embodiment of the present disclosure.

Referring to FIG. 5, the augmented reality device 100 may be connected to the mobile device 200 through a wireless communication network and perform data communication.

In operation S510, the augmented reality device 100 may transmit, to the mobile device 200, an image 500 captured through the camera 110 and sensor data 510 measured through the accelerometer 122 (see FIG. 2). The sensor data 510 may include acceleration measurement values in an x-axis direction, a y-axis direction, and a z-axis direction according to movement of the augmented reality device 100, measured by the accelerometer 122. In the embodiment shown in FIG. 5, the sensor data 510 may include 0.45 as a measurement value in the x-axis direction, 0.3 as a measurement value in the y-axis direction, and 0.0 as a measurement value in the z-axis direction. In an embodiment of the present disclosure, the augmented reality device 100 may transmit image and sensor data to the mobile device 200 through a short-range wireless communication network, such as Bluetooth, BLE, or WFD.

The mobile device 200 may obtain object recognition result data 530 by inputting the image 500 received from the augmented reality device 100 into the artificial intelligence model 242 and performing inference using the artificial intelligence model 242. In an embodiment of the present disclosure, the artificial intelligence model 242 may be an artificial neural network model pre-trained according to a learning algorithm to specify an object detection area in which an object is detected from an input image and output classification information about a direction and a type of the object included in the object detection area. The artificial intelligence model 242 is the same as the artificial intelligence model 242 illustrated in and described with reference to FIG. 3, and thus, redundant descriptions are omitted. In the embodiment of FIG. 5, the mobile device 200 may obtain, from the image 500, the object recognition result data 530 including information about a direction 532 of a hand of a user, a type 534 of the hand, and an object detection area 536 in which the hand is detected, based on a result of the inference using the artificial intelligence model 242. For example, the direction 532 of the hand indicates whether the hand is a left hand or a right hand, and the type 534 of the hand indicates a type classified according to a hand pose or a finger shape. Also, the object detection area 536 (positionOfDisplay) may include 2-dimensional coordinate information about an area in which a hand is detected among an entire area of the image 500. As illustrated in the embodiment of FIG. 5, when the entire area of the image 500 is divided into 63 areas including numbers from 1 to 63, the object detection area 536 may be an area defined by 2-dimensional location coordinates (x-axis location coordinate, y-axis location coordinate) in the number 20 and 2-dimensional location coordinates (x-axis location coordinate, y-axis location coordinate) in the number 41. In an embodiment of the present disclosure, the object detection area 536 may be defined by an area including, as vertices, total 4 pieces of location coordinate information including 2-dimensional location coordinates information in the number 20, 2-dimensional location coordinates information in the number 23, 2-dimensional location coordinates information in the number 38, and 2-dimensional location coordinates information in the number 41.

In operation S520, the mobile device 200 transmits the object recognition result data 530 to the augmented reality device 100. The mobile device 200 may transmit, to the augmented reality device 100, the object recognition result data 530 through a short-range wireless communication network, such as Bluetooth, BLE, or WFD. In an embodiment of the present disclosure, the mobile device 200 may transmit, to the augmented reality device 100 together with the object recognition result data 530, image data 520 indicating an object detection area that is an area in which a hand is detected among the entire area of the image 500.

It takes time for the augmented reality device 100 and the mobile device 200 to transmit/receive data (e.g., the image 500, the sensor data 510, the image data 520, or the object recognition result data 530) through the wireless communication network, and processing time is also required for the mobile device 200 to obtain the object recognition result data 530 from the image 500 by using the artificial intelligence model 242. When the augmented reality device 100 is moved by the user, an image captured by the augmented reality device 100 in real time by using the camera 110 may be different from the image 500 transmitted to the mobile device 200. Latency occurs due to the time required for data transmission/reception through a network and the processing time of the artificial intelligence model 242, and the augmented reality device 100 may be unable to recognize a hand of a user from an image in real time or have low accuracy of recognition due to the latency. A method of preventing such issues will be described in detail with reference to FIGS. 6 to 9.

FIG. 6 is a flowchart illustrating an operation in which the augmented reality device 100 adjusts a location of an object detection area, according to an embodiment of the present disclosure.

Operations S610 and S620 of FIG. 6 are specific operations of operation S450 of FIG. 4. Operation S610 of FIG. 6 may be performed after operation S440 of FIG. 4 is performed. Operation S460 of FIG. 4 may be performed after operation S620 of FIG. 6 is performed.

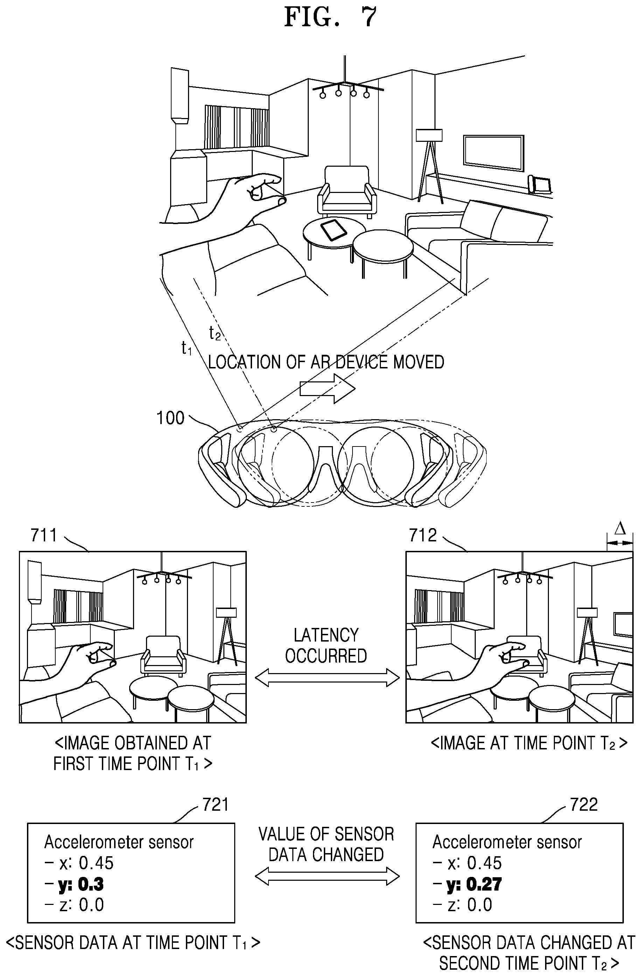

FIG. 7 is a diagram for describing sensor data changed according to location movement of the augmented reality device 100, according to an embodiment of the present disclosure.

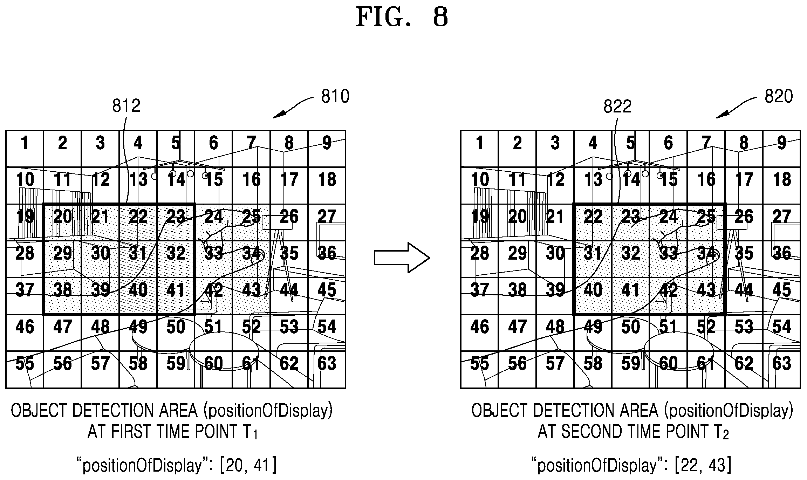

FIG. 8 is a diagram illustrating location adjustment results of object detection areas, according to location movement of the augmented reality device 100, according to an embodiment of the present disclosure.

Hereinafter, an operation by which the augmented reality device 100 adjusts a location of an object detection area, based on a changed value of sensor data, will be described with reference to FIGS. 6 to 8.

In operation S610, the augmented reality device 100 calculates the difference between the transmitted sensor data and the sensor data measured at the time point when the result of object recognition is received. The augmented reality device 100 obtains the image frame by photographing the object in real time, and thus, when the augmented reality device 100 is moved by the user after the image is transmitted to the mobile device 200 (see FIG. 7), the transmitted image and the image captured in real time may be different from each other.

Referring to FIG. 7 together, the augmented reality device 100 may obtain a first image 711 by photographing an object in real space including the hand of the user at a first time point t₁ and transmit the first image 711 to the mobile device 200. After the first image 711 is transmitted, the location of the augmented reality device 100 may be moved when the user wearing the augmented reality device 100 looks at a different location or moves to another location. The augmented reality device 100 may obtain a second image 712 by using a camera, at a second time point t₂ that is a time point after the location of the augmented reality device 100 is moved.

In the embodiment of FIG. 7, the second time point t₂ may be a time point when the object recognition result data is received from the mobile device 200. A communication time is required for the augmented reality device 100 to transmit the first image 711 to the mobile device 200 through the wireless communication network, and a processing time is required for the mobile device 200 to obtain the object recognition result data from the first image 711 by using the artificial intelligence model 242 (see FIG. 5), and thus, latency may occur between the first time point t₁ and the second time point t₂. In other words, the first image 711 obtained at the first time point t₁ and the second image 712 obtained at the second time point t₂ may be different from each other. For example, referring to the embodiment of FIG. 7, the location of the hand of the user may have been moved by △ in the second image 712 compared with the first image 711.

The augmented reality device 100 may measure the acceleration values in the x-axis direction, the y-axis direction, and the z-axis direction according to the movement of the augmented reality device 100 in real time by using the accelerometer 122 (see FIG. 2), and obtain the sensor data including the measured acceleration values. In the embodiment of FIG. 7, first sensor data 721 measured at the first time point t₁ may include 0.45 as a measurement value in the x-axis direction, 0.3 as a measurement value in the y-axis direction, and 0.0 as a measurement value in the z-axis direction, and second sensor data 722 measured at the second time point t₂ may include 0.45 as a measurement value in the x-axis direction, 0.27 as a measurement value in the y-axis direction, and 0.0 as a measurement value in the z-axis direction. The processor 130 (see FIG. 2) of the augmented reality device 100 may calculate a difference between the first sensor data 721 and the second sensor data 722 measured respectively at the first time point t₁ and the second time point t₂. For example, the calculated difference may be 0.03 in the y-axis direction.

Referring back to FIG. 6, in operation S620, the augmented reality device 100 changes the location of the object detection area, based on the calculated difference. Referring to FIG. 8 together, a first object detection area 812 detected from a first image 810 at the first time point t1 may be an area defined by 2-dimensional location coordinates (x-axis location coordinate, y-axis location coordinate) in an area number 20 and 2-dimensional location coordinates (x-axis location coordinate, y-axis location coordinate) in an area number 41. The processor 130 of the augmented reality device 100 may move a location of the first object detection area 812 in the first image 810 by the difference of the sensor data. For example, the processor 130 may move the location of the first object detection area 812 by a distance corresponding to 0.03 in the y-axis direction, which is the difference of the sensor data, as in operation S610 of FIG. 6 and the embodiment of FIG. 7. A location of a second object detection area 822 in a second image 820 at the second time point t₂ may be moved by a distance corresponding to the difference (e.g., 0.03 in the y-axis direction) of the sensor data, compared with the location of the first object detection area 812.

In the embodiment of FIG. 8, according to a result of the movement, the second object detection area 822 may be an area defined by 2-dimensional location coordinates (x-axis location coordinate, y-axis location coordinate) in an area number 22 and 2-dimensional location coordinates (x-axis location coordinate, y-axis location coordinate) in an area number 43.

The augmented reality device 100 according to the embodiment of FIGS. 6 to 8 adjusts the locations of the object detection areas 812 and 822 by using the values of sensor data measured in real time, thereby preventing latency occurred due to a time required on a network according to transmission of data (e.g., an image, a value of sensor data, or the like) to the mobile device 200 and due to a processing time required for object recognition by the mobile device 200, and enabling real-time processing of object recognition (e.g., recognition of a hand of a user).

FIG. 9 is a diagram for describing an operation in which the augmented reality device 100 changes sizes of object detection areas 912 and 922 in which a hand is detected, according to location movement of a hand of a user, according to an embodiment of the present disclosure.

Referring to FIG. 9, the processor 130 (see FIG. 2) of the augmented reality device 100 may recognize movement of a hand in an image obtained in real time. In an embodiment of the present disclosure, the processor 130 may recognize the movement of the hand in the image by using a well-known image processing technology. In the embodiment of FIG. 9, a location of the augmented reality device 100 is not changed between the first time point t₁ and the second time point t₂, but a location of the hand may have been changed. Due to the movement of the location of the hand, the location of the hand in a second image 920 obtained at the second time point t₂ may be more to the right than the location of the hand in a first image 910 obtained at the first time point t₁.

In response to the movement of the location of the hand being recognized, the processor 130 may enlarge the size of the object detection area 912. In an embodiment of the present disclosure, the processor 130 may increase the size of the object detection area 912 by a predetermined ratio. The predetermined ratio may be, for example, 1.1 times, 1.2 times, or 1.3 times, but is not limited thereto. In the embodiment of FIG. 9, the size of the object detection area 922 in the second image 920 may be greater than the size of the object detection area 912 in the first image 910. For example, the object detection area 912 in the first image 910 may be an area defined by 2-dimensional location coordinates in the number 20 and 2-dimensional location coordinates in the number 41, but the object detection area 922 in the second image 920 may be enlarged to an area defined by 2-dimensional location coordinates in the number 10 and 2-dimensional location coordinates in the number 51.

The augmented reality device 100 according to an embodiment of FIG. 9 increases the sizes of the object detection areas 912 and 922 when the location of the augmented reality device 100 is not changed but the location of the hand of the user is changed, thereby improving a processing speed and accuracy of object recognition.

FIG. 10 is a diagram illustrating an operation in which the augmented reality device 100 recognizes a type of an object included in an object detection area 1010 by using the artificial intelligence model 142, according to an embodiment of the present disclosure.

The augmented reality device 100 may recognize an object from the object detection area 1010 in an image 1000 by using the artificial intelligence model 142. In an embodiment of the present disclosure, the augmented reality device 100 may recognize a hand 1020 of the user by inputting the object detection area 1010 of the image 1000 into the artificial intelligence model 142 and performing inference.

Referring to FIG. 10, the augmented reality device 100 may receive object recognition result data from the mobile device 200 and identify the object detection area 1010 in which an object is detected among an entire area of the image 1000, based on the received object recognition result data. As illustrated in FIG. 10, when the entire area of the image 1000 is divided into 63 areas from number 1 to number 63, the object detection area 1010 may be an area defined by 2-dimensional location coordinates (x-axis location coordinate, y-axis location coordinate) in the number 22 and 2-dimensional location coordinates (x-axis location coordinate, y-axis location coordinate) in the number 43.

The augmented reality device 100 may input an image corresponding to the object detection area 1010 into the artificial intelligence model 142. The processor 130 (see FIG. 2) of the augmented reality device 100 may perform the inference using the artificial intelligence model 142 to output a type of the object from the input object detection area 1010. The artificial intelligence model 142 may be included in the augmented reality device 100 in an on-device manner. The artificial intelligence model 142 may be an artificial neural network model trained to recognize only an object corresponding to a pre-determined specific type of an object from an input image, according to a learning algorithm. For example, the artificial intelligence model 142 may be implemented as a convolutional neural network (CNN). However, the present disclosure is not limited thereto, and the artificial intelligence model 142 may be implemented as at least one of, for example, a recurrent neural network (RNN), a restricted Boltzmann machine (RBM), a deep belief network (DBN), a bidirectional recurrent deep neural network (BRDNN), and a deep Q-network.

FIG. 11 is a diagram for describing the artificial intelligence model 142 trained according to a specific type of an object, according to an embodiment of the present disclosure. Referring to FIGS. 10 and 11 together, the artificial intelligence model 142 may include a plurality of artificial neural network models 142-1 to 142-n trained to respectively recognize hands corresponding to a plurality of types, according to a direction of a hand (e.g., a left hand or a right hand) and a shape of the hand (e.g., a pose of the hand, a shape of fingers, or a form of the fingers). For example, the first artificial neural network model 142-1 (A-1) may be a model trained to recognize only a type of a hand with a finger shape indicating the alphabet "V" with a right hand. For example, the second artificial neural network model 142-2 (D-1) may be a model trained to recognize only a type of a hand corresponding to a left hand and posing to hold something with fingers, and the n-th artificial neural network model 142-n (F-3) may be a model trained to recognize only a type of a hand in a shape of a fist clenched with a right hand.

The processor 130 of the augmented reality device 100 may select, from among the plurality of artificial neural network models 142-1 to 142-n, an artificial neural network model trained by using a type corresponding to a type of an object included in object recognition result data received from the mobile device 200. For example, when the type of object included in the object recognition result data by the mobile device 200 is D-1, the processor 130 may select the second artificial neural network model 142-2 trained to recognize the hand corresponding to the type of D-1 from among the plurality of artificial neural network models 142-1 to 142-n.

Referring back to FIG. 10, the processor 130 may perform inference using the selected second artificial neural network model 142-2 to recognize, from the input object detection area 1010, the hand 1020 of the type D-1 posing to hold something with a left hand.

The augmented reality device 100 according to the embodiments of FIGS. 10 and 11 specifies the object detection area 1010 in which an object is detected according to the object recognition result data received from the mobile device 200, obtains information about a type of the object, and recognizes the hand 1020 by using an artificial neural network model (the second artificial neural network model 142-2 in the embodiments of FIGS. 10 and 11) capable of recognizing only a hand of a type corresponding to the type of the object, thereby reducing a processing time despite of a low hardware specification to guarantee real-time usability, and improving accuracy of object recognition despite that the low-level artificial intelligence model 142 is used.

FIG. 12 is a diagram illustrating an operation in which the augmented reality device 100 displays a recognized object on an image 1200, according to an embodiment of the present disclosure.

Referring to FIG. 12, the augmented reality device 100 may perform image rendering to display a result of recognizing an object on the image 1200. The processor 130 (see FIG. 2) of the augmented reality device 100 may display the image 1200 through the display 160 (see FIG. 2) and display a bounding box 1210 in an area including the recognized object, e.g., a hand, among an entire area of the image 1200.

The present disclosure provides an augmented reality device for recognizing an object by using an artificial intelligence model included in an external device. The augmented reality device 100 according to an embodiment of the present disclosure may include the camera 110, the IMU sensor 120 including the accelerometer 112, the communication interface 150 configured to perform data communication with the mobile device 200, the memory 140 storing one or more instructions, and the at least one processor 130 configured to execute the one or more instructions. The at least one processor 130 may be configured to obtain an image captured by using the camera 110 and sensor data measured by using the accelerometer 122. The at least one processor 130 may be configured to control the communication interface to transmit the obtained image and the obtained sensor data to the mobile device 200. The at least one processor 130 may be configured to receive, from the mobile device 200, information about a direction, a type, and an object detection area of an object obtained from the image according to a result of object recognition performed by the mobile device 200 by using the first artificial intelligence model 242 included in the mobile device 200. The at least one processor 130 may be configured to adjust a location of the object detection area, based on a value of the sensor data changed at a time point when the result of the object recognition is received from the mobile device 200. The at least one processor 130 may be configured to determine the second artificial intelligence model 142 for recognizing the object, based on the direction and the type of the object included in the object detection area of which the location has been adjusted. The at least one processor 130 may be configured to recognize the object from the object detection area in the image by using the determined second artificial intelligence model 142.

In an embodiment of the present disclosure, the first artificial intelligence model 242 may be an artificial neural network model pre-trained to specify an object detection area in which an object is detected from an input image and output classification information about a direction and a type of the object included in the object detection area.

In an embodiment of the present disclosure, the second artificial intelligence model 142 may be an artificial neural network model trained to recognize only an object corresponding to a pre-determined type from an input image.

In an embodiment of the present disclosure, the second artificial intelligence model 142 may include a plurality of artificial neural network models trained to recognize objects respectively corresponding to a plurality of types.

In an embodiment of the present disclosure, the plurality of artificial neural network models are included in a storage space of the memory 140 in an on-device manner.

In an embodiment of the present disclosure, the at least one processor 130 may be further configured to select, from among the plurality of artificial neural network models, an artificial neural network model trained to recognize only an object corresponding to the type of the object, received according to the result of the object recognition performed by the mobile device 200.

In an embodiment of the present disclosure, the plurality of artificial neural network models are artificial intelligence models pre-trained to recognize, from the object detection area, a specific direction of a left or right hand and a hand having a specific shape indicating a shape of fingers.

In an embodiment of the present disclosure, the at least one processor 130 may be further configured to calculate a difference between the sensor data transmitted to the mobile device 200 and the sensor data measured at the time point when the result of the object recognition is received from the mobile device 200, and change the location of the object detection area, based on the calculated difference.

In an embodiment of the present disclosure, the at least one processor 130 may be further configured to increase a size of the object detection area by a predetermined ratio when a location of a hand of a user moves at the time point when the result of the object recognition is received from the mobile device 200.

In an embodiment of the present disclosure, the augmented reality device 100 may further include a display displaying an image. In an embodiment of the present disclosure, the at least one processor 130 may be further configured to perform image rendering to display a result of recognizing an object on the image displayed through the display.

The present disclosure provides a method, performed by an augmented reality device 100, of recognizing an object by using an artificial intelligence model of an external device. The method may include transmitting, to the mobile device 200, an image captured by using the camera 110 and sensor data measured by using the accelerometer 122 (operation S420). The method may include receiving, from the mobile device 200, information about a direction, a type, and an object detection area of an object obtained from the image according to a result of object recognition performed by the mobile device 200 by using the first artificial intelligence model 242 included in the mobile device 200 (operation S440). The method may include adjusting a location of the object detection area, based on a value of the sensor data changed at a time point when the result of the object recognition is received from the mobile device 200 (operation S450). The method may include determining the second artificial intelligence model 142 for recognizing the object, based on the direction and the type of the object included in the object detection area of which the location has been adjusted (operation S460). The method may include recognizing the object from the object detection area in the image by using the determined second artificial intelligence model 142 (operation S470).

In an embodiment of the present disclosure, the first artificial intelligence model 242 may be an artificial neural network model pre-trained to specify an object detection area in which an object is detected from an input image and output classification information about a direction and a type of the object included in the object detection area.

In an embodiment of the present disclosure, the second artificial intelligence model 142 may be an artificial neural network model trained to recognize only an object corresponding to a pre-determined type from an input image.

In an embodiment of the present disclosure, the second artificial intelligence model 142 may include a plurality of artificial neural network models trained to recognize objects respectively corresponding to a plurality of types. In an embodiment of the present disclosure, the plurality of artificial neural network models may be included in the augmented reality device 100 in an on-device manner.

In an embodiment of the present disclosure, the determining of the second artificial intelligence model 142 for recognizing the object may include selecting, from among the plurality of artificial neural network models, an artificial neural network model trained to recognize only an object corresponding to the type of the object, received according to the result of the object recognition performed by the mobile device 200.

In an embodiment of the present disclosure, the plurality of artificial neural network models are artificial intelligence models pre-trained to recognize, from the object detection area, a specific direction of a left or right hand and a hand having a specific shape indicating a shape of fingers.

In an embodiment of the present disclosure, the adjusting of the location of the object detection area may include calculating a difference between the sensor data transmitted to the mobile device 200 and the sensor data measured at the time point when the result of the object recognition is received from the mobile device 200 (operation S610), and changing the location of the object detection area, based on the calculated difference (operation S620).

In an embodiment of the present disclosure, the adjusting of the location of the object detection area may include increasing a size of the object detection area by a predetermined ratio when a location of a hand of a user moves at the time point when the result of the object recognition is received from the mobile device 200.

In an embodiment of the present disclosure, the method may further include performing image rendering to display, on the image, a result of recognizing the object.

The present disclosure provides the mobile device 200. The mobile device 200 according to an embodiment of the present disclosure may include the communication interface 210 configured to perform data communication with the augmented reality device 100, the memory 240 storing an artificial neural network model pre-trained to specify an object detection area where an object is detected from an input image and output classification information about a direction and a type of the object included in the object detection area, and the at least one processor 230. The at least one processor 230 may be configured to receive an image and sensor data from the augmented reality device 100 through the communication interface 210. The at least one processor 230 may be configured to input the received image into the artificial neural network model 242 to obtain, from the image, object recognition result data including information about the object detection area and about the direction and the type of the object. The at least one processor 230 may be configured to control the communication interface 210 to transmit the obtained object recognition result data to the augmented reality device 100.

A program executed by the augmented reality device 100 described in the present disclosure may be implemented by a hardware component, a software component, and/or a combination of a hardware component and a software component. The program may be performed by any system capable of performing computer-readable instructions.

Software may include a computer program, a code, an instruction, or a combination thereof, and may configure the processing device to operate as desired or instruct the processing device independently or collectively.

The software may be implemented as a computer program that includes instructions stored on computer-readable storage media. Examples of computer-readable recording medium include magnetic storage media (for example, read-only memory (ROM), random-access memory (RAM), floppy disc, and hard disc) and optical reading media (for example, CD-ROM and digital versatile disk (DVD). The computer-readable recording medium may be distributed over a computer system connected through a network, and computer-readable codes may be stored and executed in a distributed manner. The medium is readable by a computer, stored in a memory, and may be executed in a processor.

The computer-readable storage medium may be provided in the form of a non-transitory storage medium. The term "non-transitory" only means that a storage medium does not include a signal and is tangible, and does not distinguish whether data is stored in the storage medium semi-permanently or temporarily. For example, the "non-transitory storage medium" may include a buffer where data is temporarily stored.

Furthermore, a program according to the embodiments of the present specification may be provided by being included in a computer program product. The computer program products are products that can be traded between sellers and buyers.

The computer program product may include a software program or a computer-readable storage medium storing a software program. For example, the computer program product may include a product in the form of a software program (e.g., a downloadable application) that is distributed electronically by a manufacturer of the augmented reality device 100 or through an electronic market (e.g., Samsung Galaxy Store). For electronic distribution, at least a part of the software program may be stored in a storage medium or may be temporarily generated. In this case, the storage medium may be a server of the manufacturer of an augmented reality device 100, a server of the electronic market, or a storage medium of a relay server temporarily storing the software program.

The computer program product may include a storage medium of the server or a storage medium of the augmented reality device 100 in a system including the augmented reality device 100 and/or the server. Alternatively, when there is a third device (e.g., wearable device) communicably connected to the augmented reality device 100, the computer program product may include a storage medium of the third device. Alternatively, the computer program product may include the software program transmitted from the augmented reality device 100 to the third device, or transmitted from the third device to an electronic device.

In this case, one of the augmented reality device 100 and the third device may perform a method according to embodiments by executing the computer program product. Alternatively, one or more of the augmented reality device 100 and the third device may perform the method according to embodiments in a distributed fashion by executing the computer program product.

For example, the augmented reality device 100 may execute a computer program product stored in the memory 140 (see FIG. 2) to control another electronic device (e.g., a mobile device) in communicably connected to the augmented reality device 100 to perform a method according to embodiments.

In another example, the third device may execute the computer program product to control an electronic device communicatively connected to the third device to perform a method according to embodiments.

In a case that the third device executes the computer program product, the third device may download the computer program product from the augmented reality device 100 and execute the downloaded computer program product. Alternatively, the third device may execute the computer program product provided in a preloaded state to perform a method according to embodiments.

As above, embodiments have been described by the limited examples and drawings, but various changes and modifications are possible from the above description by one of ordinary skill in the art. For example, appropriate results may be achieved even when the described techniques are performed in an order different from the described method, and/or components, such as computer systems or modules, are combined or associated in a form different from the described method, or replaced by other components or equivalents.

## Claims

1. An augmented reality device (100) comprising:
a camera (110);
an inertial measurement unit (IMU) sensor (120) including an accelerometer (112);
a communication interface (150) configured to perform data communication with a mobile device (200);
a memory (140) storing one or more instructions; and
at least one processor (130) configured to execute the one or more instructions,
wherein the at least one processor (130) is configured to:
obtain an image captured by using the camera (110) and sensor data measured by using the accelerometer (122);
control the communication interface to transmit the obtained image and the obtained sensor data to the mobile device (200);
receive, from the mobile device (200), information about a direction, a type, and an object detection area of an object obtained from the image according to a result of object recognition performed by the mobile device (200) by using a first artificial intelligence model (242) included in the mobile device (200);
adjust a location of the object detection area, based on a value of the sensor data changed at a time point when the result of the object recognition is received from the mobile device (200);
determine a second artificial intelligence model (142) for recognizing the object, based on the direction and the type of the object included in the object detection area of which the location has been adjusted; and
recognize the object from the object detection area in the image by using the determined second artificial intelligence model (142).

2. The augmented reality device (100) of claim 1, wherein
the second artificial intelligence model (142) is an artificial neural network model trained to recognize only an object corresponding to a pre-determined type from an input image.

3. The augmented reality device (100) of claim 2, wherein
the second artificial intelligence model (142) comprises a plurality of artificial neural network models trained to recognize objects respectively corresponding to a plurality of types.

4. The augmented reality device (100) of claim 3, wherein
the plurality of artificial neural network models are included in a storage space of the memory (140) in an on-device manner.

5. The augmented reality device (100) of claim 3, wherein
the at least one processor (130) is further configured to
select, from among the plurality of artificial neural network models, an artificial neural network model trained to recognize only an object corresponding to the type of the object, received according to the result of the object recognition performed by the mobile device (200).

6. The augmented reality device (100) of claim 3, wherein
the plurality of artificial neural network models are artificial intelligence models pre-trained to recognize, from the object detection area, a specific direction of a left or right hand and a hand having a specific shape indicating a shape of fingers.

7. The augmented reality device (100) of any one of claims 1 to 6, wherein
the at least one processor (130) is further configured to:
calculate a difference between the sensor data transmitted to the mobile device (200) and the sensor data measured at the time point when the result of the object recognition is received from the mobile device (200); and
change the location of the object detection area, based on the calculated difference.

8. The augmented reality device (100) of any one of claims 1 to 7, wherein
the at least one processor (130) is further configured to
increase a size of the object detection area by a predetermined ratio when a location of a hand of a user moves at the time point when the result of the object recognition is received from the mobile device (200).

9. A method, performed by an augmented reality device (100), of recognizing an object by using an artificial intelligence model of an external device, the method comprising:
transmitting, to a mobile device (200), an image captured by using a camera and sensor data measured by using an accelerometer (S420);
receiving, from the mobile device (200), information about a direction, a type, and an object detection area of an object obtained from the image according to a result of object recognition performed by the mobile device (200) by using a first artificial intelligence model (242) included in the mobile device (200) (S440);
adjusting a location of the object detection area, based on a value of the sensor data changed at a time point when the result of the object recognition is received from the mobile device (200) (S450);
determining a second artificial intelligence model (142) for recognizing the object, based on the direction and the type of the object included in the object detection area of which the location has been adjusted (S460); and
recognizing the object from the object detection area in the image by using the determined second artificial intelligence model (142) (S470).

10. The method of claim 9, wherein
the second artificial intelligence model (142) is an artificial neural network model trained to recognize only an object corresponding to a pre-determined type from an input image.

11. The method of claim 10, wherein
the second artificial intelligence model (142) comprises a plurality of artificial neural network models trained to recognize objects respectively corresponding to a plurality of types, and
the plurality of artificial neural network models are included in the augmented reality device (100) in an on-device manner.

12. The method of claim 11, wherein
the determining of the second artificial intelligence model (142) for recognizing the object comprises
selecting, from among the plurality of artificial neural network models, an artificial neural network model trained to recognize only an object corresponding to the type of the object, received according to the result of the object recognition performed by the mobile device (200).

13. The method of claim 11, wherein
the plurality of artificial neural network models are artificial intelligence models pre-trained to recognize, from the object detection area, a specific direction of a left or right hand and a hand having a specific shape indicating a shape of fingers.

14. The method of any one of claims 9 to 13, wherein
the adjusting of the location of the object detection area comprises:
calculating a difference between the sensor data transmitted to the mobile device (200) and the sensor data measured at the time point when the result of the object recognition is received from the mobile device (200) (S610); and
changing the location of the object detection area, based on the calculated difference (S620).

15. The method of any one of claims 9 to 14, wherein
the adjusting of the location of the object detection area comprises
increasing a size of the object detection area by a predetermined ratio when a location of a hand of a user moves at the time point when the result of the object recognition is received from the mobile device (200).
